(19) **Europäisches Patentamt**
**European Patent Office**
**Office européen des brevets**

(11) **EP 1 212 872 B1**

(12) **FASCICULE DE BREVET EUROPEEN**

(45) Date de publication et mention
de la délivrance du brevet:
**17.12.2008 Bulletin 2008/51**

(51) Int Cl.:
*H04L 25/02* (2006.01)     *H04L 1/06* (2006.01)
*H04L 27/26* (2006.01)     *H04B 7/08* (2006.01)

(21) Numéro de dépôt: **00962613.6**

(22) Date de dépôt: **12.09.2000**

(86) Numéro de dépôt international:
**PCT/FR2000/002514**

(87) Numéro de publication internationale:
**WO 2001/020860 (22.03.2001 Gazette 2001/12)**

(54) **RECEPTEUR A MULTIPLEXAGE PAR REPARTITION EN FREQUENCES ORTHOGONALES AVEC ESTIMATION ITERATIVE DE CANAL ET PROCEDE CORRESPONDANT**

OFDM-EMPFÄNGER MIT ITERATIVER KANALSCHÄTZUNG UND ZUGEHÖRIGES VERFAHREN

RECEIVER WITH ORTHOGONAL FREQUENCY DISTRIBUTION MULTIPLEXING HAVING ITERATIVE CHANNEL ESTIMATION AND CORRESPONDING METHOD

(84) Etats contractants désignés:
**DE FI GB IT SE**

(30) Priorité: **13.09.1999 FR 9911415**

(43) Date de publication de la demande:
**12.06.2002 Bulletin 2002/24**

(73) Titulaire: **FRANCE TELECOM**
**75015 Paris (FR)**

(72) Inventeurs:
• **SIALA, Mohamed**
 **F-92140 Clamart (FR)**
• **JAFFROT, Emmanuel**
 **F-75014 Paris (FR)**

(56) Documents cités:
• **TOMBA L ET AL: "DOWNLINK DETECTION SCHEMES FOR MC-CDMA SYSTEMS IN INDOOR ENVIRONMENTS" IEICE TRANSACTIONS ON COMMUNICATIONS, INSTITUTE OF ELECTRONICS, INFORMATION AND COMMUN. ENG., vol. E79-B, no. 9, septembre 1996 (1996-09), pages 1351-1360, XP000636076 JAPON ISSN: 0916-8516**
• **SIALA M ET AL: "ITERATIVE RAKE RECEIVER WITH MAP CHANNEL ESTIMATION FOR DS-CDMA SYSTEMS" ANNALES DES TELECOMMUNICATIONS, EDITIONS HERMES, vol. 54, no. 3-4, mars 1999 (1999-03), pages 243-254, XP000834647 FRANCE ISSN: 0003-4347**
• **TUFVESSON F ET AL: "PILOT ASSISTED CHANNEL ESTIMATION FOR OFDM IN MOBILE CELLULAR SYSTEMS" IEEE VEHICULAR TECHNOLOGY CONFERENCE, vol. 3, 4 mai 1997 (1997-05-04), pages 1639-1643, XP000738641 NEW YORK, [1]TATS-UNIS ISBN: 0-7803-3660-7**
• **PROAKIS J G: "DIGITAL COMMUNICATIONS" 1995 , MCGRAW-HILL , NEW YORK, [1]TATS-UNIS XP002139175 240640 cité dans la demande * page 778, dernier alinéa - page 779 premier alinéa ***

**Description**

**Domaine technique**

La présente invention a pour objet un récepteur à multiplexage par répartition en fréquences orthogonales avec estimation itérative de canal et un procédé correspondant. Elle trouve une application en radiocommunications et plus particulièrement dans la technique d'accès multiple dite OFDM pour "Orthogonal Frequency Division Multiplexing". Elle peut être appliquée -entre autres- au système radiomobile européen HIPERLAN II.

**Etat de la technique antérieure**

La technique OFDM [1] est une technique multi-porteuse qui permet de répartir les utilisateurs dans le plan temps-fréquence d'une façon simple. Elle permet en outre de transmettre des signaux à haut débit sans avoir à utiliser d'égaliseur. Cette méthode a été largement utilisée dans des contextes de diffusion tels que le DVB-T ("Digital Video Broadcasting") [2] et le DAB ("Digital Audio Broadcasting") [3]. En contexte radiomobile, l'OFDM est présent dans la norme HIPERLAN II.

La technique OFDM est à la fois une technique d'accès multiple et une technique de modulation. Le principe de base de la technique OFDM est de produire un certain nombre de signaux à bande étroite tous orthogonaux entre eux. En prenant les précautions d'usage, on utilise ces propriétés d'orthogonalité pour retrouver les données transmises. La réalisation d'un tel système fait appel à la mise en oeuvre d'une transformée de Fourier inverse à l'émission et d'une transformée de Fourier à la réception.

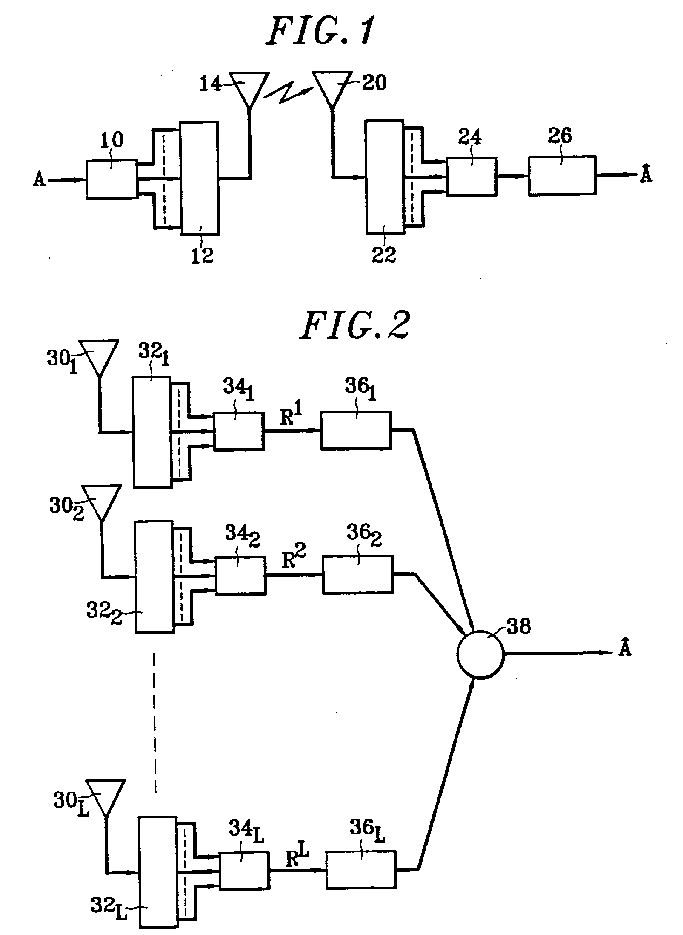

La figure 1 annexée illustre une chaîne de transmission OFDM classique avec un seul capteur. Cette chaîne comprend un circuit 10 de conversion série-parallèle recevant des symboles A, un circuit 12 de transformation de Fourier inverse 12, des moyens d'émission 14, des moyens de réception 20, un circuit 22 de transformation de Fourier, un convertisseur parallèle-série 24 et enfin un moyen de décision 26 qui restitue les symboles estimés Â.

L'émetteur OFDM classique traite le flux de données par bloc. Il gère ce flux par séquences de $N_t$ symboles et en réalise la transformée de Fourier inverse. Cela revient à dire que la transformée de Fourier inverse produit $N_f$ sous-porteuses, chacune véhiculant un des symboles de la séquence de départ. Ce bloc, appelé symbole OFDM, contient les symboles de données, mais peut aussi contenir des symboles pilotes qui peuvent être utilisés pour des besoins de synchronisation ou d'estimation de canal. Contrairement au cas des signaux CDMA ("Code Division Multiple Access") ou TDMA ("Time Division Multiple Access"), où un symbole pilote occupe d'emblée l'ensemble de la bande de transmission, la technique OFDM nécessite de réellement répartir des symboles pilotes sur l'ensemble du plan temps-fréquence.

Le canal radiomobile emprunté lors d'une communication entre un émetteur et un récepteur est généralement de type multi-trajets avec évanouissements rapides de Rayleigh. Ce phénomène est dû à la conjonction du mouvement du mobile et de la propagation de l'onde radioélectrique selon plusieurs chemins.

Le récepteur traite le signal reçu par bloc de symboles OFDM (bloc temps-fréquence). Le signal est reçu sur un réseau de L capteurs, créant L branches de diversité. L'estimation de canal est réalisée sur chacune de ces branches et les résultats sont combinés au sens du MRC ("Maximum Ratio Combining") pour finalement estimer les données émises.

Un récepteur à L branches de diversité est représenté sur la figure 2. Il comprend L capteurs $30_1$, $30_2$, ..., $30_L$, L circuits de transformation de Fourier $32_1$, $32_2$, ..., $32_L$, L convertisseurs parallèle-série $34_1$, $34_2$, ..., $34_L$, L circuits d'estimation de canal $36_1$, $36_2$, ..., $36_L$ et un additionneur 38 délivrant les symboles estimés Â.

Du point de vue du récepteur, après démodulation, le canal affectant un bloc temps-fréquence peut être représenté sous forme d'une matrice temps-fréquence, ou encore d'une surface dans l'espace temps-fréquence-amplitude. Le problème est donc traité dans un espace bidimensionnel, contrairement au TDMA [4] où le problème est unidimensionnel.

L'estimation de canal est basée sur l'utilisation des symboles pilotes. Ils permettent d'obtenir directement une estimation du canal aux emplacements des pilotes en vue d'une interpolation pour estimer le canal affectant le reste des symboles.

Ces techniques présentent des inconvénients. En effet, le canal vu par le récepteur peut varier de manière significative d'un bloc temps-fréquence à autre. Cette variation est principalement due aux changements de conditions de propagation entre l'émetteur et le récepteur. D'un point dé vue physique, le caractère variable du canal peut être caractérisé par le produit $B_d \times T_m$ où $B_d$ représente la largeur de la bande Doppler et $T_m$ l'étalement des retards. Plus le produit $B_d \times T_m$ est grand, plus le canal varie rapidement dans les domaines temporel et fréquentiel.

Les méthodes de réception de l'art antérieur ne cherchent pas à optimiser l'estimation du canal. Elles se contentent de réaliser une estimation du canal aux positions des symboles pilotes puis d'étendre cette estimation aux données par interpolation. Les interpolations sont généralement réalisées de manière linéaire. Trois des méthodes les plus courantes peuvent être évoquées :

- La première prend en compte les trois plus proches symboles pilotes du symbole auquel on veut estimer le canal. On calcule le plan passant par les trois symboles pilotes et on en déduit le canal au point considéré. Même en respectant le critère de Nyquist du point de vue des symboles pilotes, c'est-à-dire en utilisant suffisamment de symboles pilotes et en les répartissant de manière à échantillonner correctement le plan temps-fréquence, cette méthode est sensible aux fortes variations de canal et ne permet pas de réaliser une estimation fiable du canal, surtout dans les cas où le produit $B_d x T_m$ est élevé.
- La deuxième méthode est une forme simple de la technique du MMSE ("Minimum Mean Square Error") : elle consiste à rechercher le plan constant moyennant les valeurs du canal au niveau des symboles pilotes et à en déduire les valeurs du canal affectant les données émises. Cette modélisation de canal est bien adaptée à des canaux variant très peu sur le bloc reçu, c'est-à-dire pour des produits $B_d x T_m$ faibles. Cependant, dès que le canal devient plus sélectif, la modélisation plane montre ses limites et les performances sont dégradées.
- La troisième méthode est une autre forme de MMSE, avec un plan recherché non constant. Cette méthode s'adapte donc mieux aux cas où le canal varie lentement, mais est moins adaptée que la deuxième dans le cas de canaux presque constants.

Ces trois méthodes sont donc adaptées à des cas très spécifiques de propagation, mais en aucune façon à des canaux de type multitrajet sélectifs en temps et en fréquence.

La présente invention a justement pour but de remédier à cet inconvénient.

**Exposé de l'invention**

La présente invention a pour but principal d'améliorer les performances des systèmes OFDM existants ou à venir. Cette amélioration, obtenue par une optimisation de l'estimation de canal, permet d'augmenter sensiblement la capacité du système. Cette amélioration est engendrée par une optimisation du fonctionnement du récepteur OFDM dans le cas des évanouissements lents mais également dans le cas plus complexe des évanouissements très rapides.

Il est alors possible de contrecarrer les dégradations en performance engendrées par une variation rapide de canal sur le bloc temps-fréquence considéré en réception.

L'invention permet de réduire, à qualité de réception constante, le nombre relatif et/ou la puissance des symboles pilotes. Ce but est atteint par la prise en compte de manière optimale d'un nombre arbitraire de symboles pilotes de blocs temps-fréquence consécutifs dans l'estimation de canal. Il est également atteint par le caractère optimal de la prise en compte dans l'estimation de canal (d'une partie ou de la totalité) des symboles de données de ces blocs, qui sont bien sûr plus nombreux que les symboles pilotes.

L'invention peut être utilisée quelle que soit la façon dont les symboles pilotes sont introduits dans le flux d'information transmise.

Le récepteur de l'invention effectue un traitement bloc par bloc à chaque fois qu'un nombre donné de symboles OFDM est disponible. Sur chaque branche de diversité, le canal multi-trajets est tout d'abord estimé grossièrement au moyen des symboles pilotes associés au bloc reçu et éventuellement à d'autres blocs. Cette estimation a pour but l'initialisation de l'algorithme d'estimation de canal itératif. On traite ensuite l'ensemble des symboles (données et pilotes) pour obtenir l'estimation de canal permettant de générer des sorties souples des symboles de données émis. Les sorties souples obtenues à la fin d'une itération peuvent à nouveau être utilisées conjointement aux symboles pilotes pour apporter une amélioration supplémentaire à l'estimation de canal, et donc améliorer davantage les estimations souples des symboles de données.

La technique proposée permet en outre de tenir compte de la structure codée des symboles de donnée et peut être optimisée dans ce sens, ce qui conduit à produire des sorties souples de meilleure qualité.

L'estimation du canal multi-trajets repose, d'une part, sur l'utilisation de l'algorithme itératif dit E.M. ("Expectation Maximisation") [5], [6], [7], pour trouver la réalisation de canal la plus vraisemblable conditionnellement au bloc reçu à traiter et au codage du canal éventuellement utilisé. Elle repose également sur la décomposition du canal multi-trajets bidimensionnel sur chaque branche de diversité selon le théorème d'expansion de Karhunen-Loève [8]. Cette décomposition permet une caractérisation souple des variations temporelles des trajets dues à l'effet Doppler ainsi que des variations fréquentielles dues à
l'étalement temporel et s'intègre facilement dans l'algorithme E.M. lui-même.

**L'article de la référence [9]**

décrit un système de radiocommunications de type OFDM. Le signal OFDM est traité porteuse par porteuse. Autrement dit le traitement est monodimensionnel.

**L'article de la référence [10]** décrit un récepteur "RAKE" dans lequel l'estimation du canal s'effectue de manière itérative selon un critère de maximum a posteriori. Ce récepteur s'inscrit dans le cadre de la technique DS-CDMA et non dans la technique OFDM. La modélisation s'effectue uniquement dans le domaine temporel, puisqu on est en CDMA.

De façon plus précise, la présente invention à pour objet un récepteur pour radiocommunications à multiplexage par répartition en fréquences orthogonales (OFDM) comprenant :

i) une pluralité de L branches de diversité traitant des blocs de symboles numériques, chaque bloc comprenant des symboles numériques, chaque bloc comprenant des symboles de données et des symboles pilotes répartis dans un bloc bidimensionnel temps-fréquence à $N_t$ intervalles de temps et à $N_f$ intervalles de fréquence, chaque branche de diversité comprenant un capteur radioélectrique, des moyens délivrant un signal de sortie à N composantes constituant les composantes d'un vecteur $R^1$, où 1 désigne le rang de la branche de diversité (1 allant de 0 à L-1),
ii) un estimateur de canal traitant les L signaux délivrés par les L branches de diversité et délivrant des estimations souples des symboles de données,
iii) un organe de décision recevant les estimations souples des symboles de données et délivrant une estimation des symboles de données,

(a) l'estimateur de canal traite un vecteur $C^1$ à N composantes caractérisant le canal dans un bloc bidimensionnel temps-fréquence, ces moyens d'estimation étant aptes à définir une base de N vecteurs $\mathbf{B}_k$ qui sont les N vecteurs propres normalisés de la matrice de covariance temps-fréquence du canal, ces moyens décomposant chaque vecteur $C^\ell$ dans cette base, les N coefficients de cette décomposition étant notés $G_k^\ell$ avec k allant de 0 à N-1, les coefficients $G_k^\ell$ définissant, pour chaque branche $\ell$ de diversité, un vecteur $\mathbf{G}^\ell$, qui est une représentation du canal vu en sortie de ladite branche de diversité,
(b) l'estimateur de canal traite un nombre fini (D) d'itérations selon un algorithme d'estimation-maximisation (EM) fondé sur le critère de probabilité maximum a posteriori (MAP), les moyens d'estimation étant initialement mis en oeuvre en prenant en compte les symboles pilotes contenus dans le bloc bidimensionnel temps-fréquence considéré et éventuellement des symboles pilotes contenus dans les blocs temps-fréquence voisins, ce qui conduit à une estimation d'ordre 0, l'estimateur de canal prenant en compte, ensuite, les symboles de données pour les autres itérations et ainsi de suite, l'estimateur de canal délivrant finalement, après une dernière itération D, les coefficients optimaux $G_k^{\ell(D)}$ (k de 0 à (N-1) et $\ell$ de 0 à L-1), définissant chaque branche $\ell$ de diversité, le vecteur $\mathbf{G}^\ell$ représentant le canal.

Dans un mode particulier de réalisation $N_t=N_f$ et les blocs temps-fréquences sont carrés.
La présente invention a également pour objet un procédé de réception dont les opérations correspondent aux fonctions remplies par les différents moyens du récepteur qui vient d'être défini.

**Brève description des figures**

- la figure 1, déjà décrite, montre une chaîne de transmission OFDM classique à un seul capteur ;

- la figure 2, déjà décrite, montre un récepteur OFDM classique à plusieurs capteurs et L branches de diversité ;

- la figure 3 illustre un récepteur conforme à l'invention ;

- la figure 4 illustre le processus d'estimation itérative selon l'invention ;

- la figure 5 illustre un mode particulier de réalisation du récepteur de l'invention ;

- la figure 6 montre un exemple de répartition des symboles pilotes et des symboles de données dans un bloc temps-fréquence ;

- la figure 7 est une représentation des vecteurs propres de la matrice de corrélation du canal à spectre Doppler classique et profil d'intensité multi-trajets exponentiel pour $B_d T_m = 10^{-5}$ ;

- la figure 8 est une représentation des mêmes vecteurs propres mais pour $B_dT_m$=10$^{-3}$ ;

- la figure 9 donne les variations du taux d'erreur binaire (TEB) en fonction du rapport $E_s/I_o$ pour un récepteur conforme à l'invention et pour divers récepteurs classiques, dans le cas d'un produit $B_dT_m$ égal à 10$^{-5}$ avec 16 symboles pilotes répartis comme indiqué sur la figure 5 ;

- la figure 10 donne ces mêmes variations mais pour un produit $B_dT_m$ égal à 10$^{-3}$.

## Description détaillée de modes particuliers de réalisation

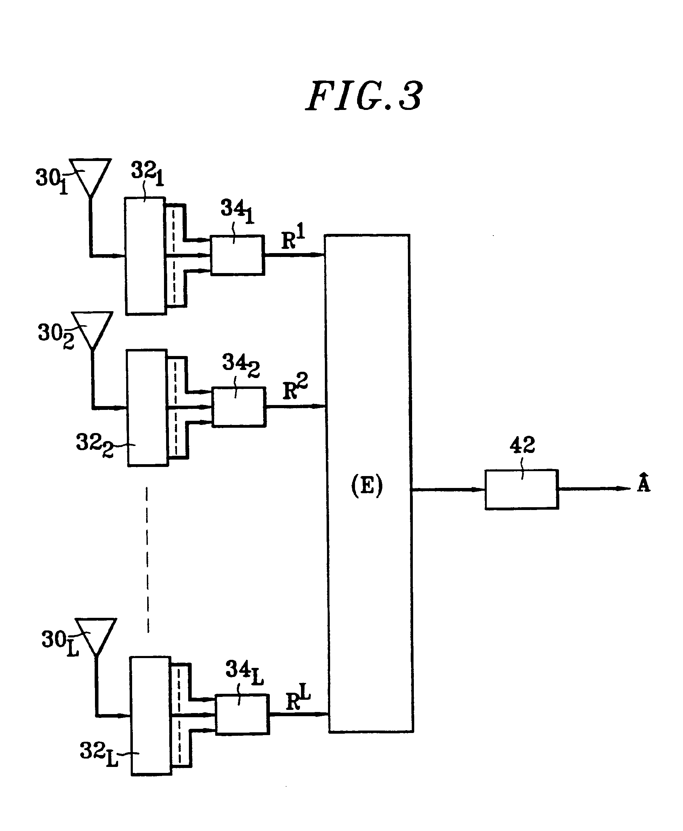

Un récepteur conforme à l'invention est représenté schématiquement sur la figure 3. Ce récepteur comprend des moyens déjà représentés sur la figure 2 et qui portent les mêmes références. Mais le récepteur comprend des moyens pour mettre en oeuvre un algorithme d'estimation itératif qui est schématisé par le bloc (E) qui alimente l'organe de décision 42.

L'entité élémentaire du signal OFDM correspond à la transformée de Fourier inverse d'une séquence de symboles. Le récepteur de l'invention traite bloc par bloc le signal reçu. La taille du bloc traité ne dépend pas nécessairement du nombre de porteuses du système OFDM et peut prendre en compte tout ou partie d'un ou de plusieurs symboles OFDM. La forme et la taille du bloc traité en réception est libre, de manière à s'adapter au mieux au système.

L'estimation de canal est réalisée bloc par bloc. Un bloc est composé de N symboles $a_{mn}$ d'énergie $E_{mn}$ et de position bidimensionelle (mF, nT) où F et T sont l'espacement respectivement en fréquence et en temps entre deux symboles adjacents. Ces symboles prennent leurs valeurs dans un alphabet $\Omega$ de type modulation à déplacement de phase (MDP) arbitraire. Chaque bloc est composé de $N_D$ symboles de donnée indexés dans l'ensemble $S_D$ et $N_P$ symboles pilotes indexés dans l'ensemble Sp.

En règle générale, les récepteurs classiques utilisent des symboles pilotes de plus forte puissance que les symboles de données. Cette différence de puissance permet au mieux d'estimer le canal, mais risque d'introduire des interférences entre porteuses et donc de réduire la capacité du système OFDM. La technique d'estimation de canal selon l'invention permet de réaliser une estimation de canal optimale quelle que soit la valeur de la puissance des symboles pilotes; dans la suite, on notera $E_P$ l'énergie des symboles pilotes et $E_D$ l'énergie des symboles de donnée.

Le canal multitrajets emprunté par le signal OFDM est composé de plusieurs trajets présentant ou pouvant présenter des variations temporelles et fréquentielles dues à l'effet Doppler. Chaque trajet est caractérisé par une puissance moyenne et un spectre de puissance Doppler (SPD) donnés qui dépendent de l'environnement et de la vitesse du mobile. De plus, les évanouissements subis par chaque trajet peuvent être aussi bien de type Rayleigh que de type Rice.

On note $J_0(.)$ la fonction de Bessel de première espèce d'ordre 0. A titre d'exemples, la fonction d'autocorrélation temps-fréquence du canal à spectre de puissance Doppler classique et au profil d'intensité multitrajets exponentiel de puissance moyenne $\phi(0,0)$ vu sur une branche de diversité est donnée par

$$\phi(\Delta f, \Delta t) = \phi(0,0) \frac{J_0(\pi B_d \Delta t)}{1 + j2\pi T_m \Delta f}$$

Le récepteur multicapteurs OFDM de l'invention est composé de L capteurs $30_1$, $30_2$, ..., $30_L$ décorrélés spatialement, donnant naissance à L branches de diversité. Sur chacune de ces branches, le signal reçu est en premier lieu démodulé par la transformée de Fourier dans les circuits $32_1$, $32_2$, ..., $32_L$. On suppose que le signal en sortie de la l$^{ième}$ branche de diversité associé au symboles $a_{mn}$ s'écrit

$$R_{mn}^{\ell} = c_{mn}^{\ell} a_{mn}^{\ell} + N_{mn}^{\ell}$$

où $c_{mn}^{\ell}$ est le facteur de gain du canal discret de la $\ell^{ème}$ branche de diversité vu par le symbole $a_{mn}$ et $N_{mn}^{\ell}$ est un bruit blanc ganssien complexe additif de variance $N_0$. Les facteurs de gain sont indépendants d'une branche de diversité à l'autre, mais corrélés en temps et en fréquence entre eux sur la même branche.

L'invention a pour but d'estimer les facteurs de gain $c_{mn}^{\ell}$ du canal.

Soit $(.)^T$ l'opérateur de transposition. Pour des raisons de notation, on introduit la fonction d'indexation $\delta(k)$=

(m(k),n(k)) entre l'ensemble monodimensionnel $\{k\}_{k=0}^{N-1}$ et l'ensemble d'indexation bidimensionnel $S_D \cup S_P$. De plus, pour chaque bloc transmis, on introduit le vecteur signal en sortie du filtre adapté de la $\ell^{ème}$ branche de diversité

$$\mathbf{R}^{\ell} = (R_{\delta(0)}^{\ell}, \ldots, R_{\delta(N-1)}^{\ell})^{T}$$

Pour s'affranchir de la dépendance de l'amplitude de chaque symbole MDP $a_{mn}$ sur son index (m, n), on introduit le vecteur normalisé du bloc transmis :

$$\mathbf{A} = (A_{\delta(0)}, \ldots, A_{\delta(N-1)})^{T}$$

avec $A_{\delta(k)} = a_{\delta(k)}/|a_{\delta(k)}|$ . Sur ces bases, il est possible de réécrire les composantes du vecteur reçu sur la $\ell^{ème}$ branche de diversité :

$$R_{\delta(k)}^{\ell} = C_{\delta(k)}^{\ell} A_{\delta(k)} + N_{\delta(k)}^{\ell}$$

où $C_{\delta(k)}^{\ell}$ est la $\delta(k)^{ème}$ composante du vecteur canal discret multiplicatif équivalent sur la $\ell^{ème}$ branche:

$$\mathbf{C}^{\ell} = (|a_{\delta(0)}|c_{\delta(0)}^{\ell}, \ldots, |a_{\delta_{N-1}}|c_{\delta(N-1)}^{\ell})^{T}$$

On cherche à estimer pour chaque bloc et sur chaque branche le vecteur $\mathbf{C}^{\ell}$.

Pour l'estimation du canal, selon le critère du Maximum a Posteriori, on utilise une représentation adéquate du canal multitrajets discret pour chaque branche de diversité. Cette représentation est basée sur le théorème de décomposition orthogonale de Karhunen-Loève. Le vecteur représentant le canal multitrajets discret équivalent sur la $\ell^{ème}$ branche de diversité $\mathbf{C}^{\ell}$ s'exprime de la façon suivante:

$$\mathbf{C}^{\ell} = \sum_{k=0}^{N-1} G_k^{\ell} \mathbf{B}_k$$

où $\{\mathbf{B}_k\}_{k=0}^{N-1}$ sont les N vecteurs propres normalisés de la matrice d'autocorrélation temps-fréquence du canal discret $\mathbf{F}=E[\mathbf{C}^{\ell}\mathbf{C}^{\ell*T}]$ et $\{G_k^{\ell}\}_{k=0}^{N-1}$ sont des variables aléatoires gaussiennes complexes, indépendantes, centrées et de variances égales aux valeurs propres $\{\Gamma_k\}_{k=0}^{\ell}$ de la matrice hermitienne $\mathbf{F}$. La $(p,q)^{ème}$ entrée de la matrice $\mathbf{F}$ est donnée par

$$E_{pq} = \sqrt{E_{\delta(p)}E_{\delta(q)}}\,\phi([m(p) - m(q)]F, [n(p) - n(q)]T)$$

Les vecteurs $\{\mathbf{G}^{\ell}\}_{1=0}^{L-1}$, avec $\mathbf{G}^{\ell} = (G_0^{\ell}, \ldots, G_{0N-1}^{\ell})^T$ sont la représentation adéquate du canal discret multiplicatif vu en sortie des L branches de diversité.

L'estimation du canal revient donc à estimer $\left\{G_k^{\ell}\right\}_{k=0,\ell=0}^{N-1,L-1}$. Cette estimation est réalisée itérativement par la formule suivante en notant $G_p^{\ell(d)}$ l'estimation de $G_p^1$ à la d$^{\text{ème}}$ itération de l'algorithme :

$$G_p^{\ell(d+1)} = w_p \sum_{k=0}^{N-1} (R_{\delta(k)}^{\ell}(\sum_{A \in \Omega} A P(A_{\delta(k)} = A \mid \{\mathbf{R}^{\ell}\}_{\ell=0}^{L-1}, \{\mathbf{G}^{\ell (d)}\}_{\ell=0}^{L-1})))^{\cdot} B_{p\delta(k)}^{\cdot}$$

où $B_{p\delta(k)}$ est la k$^{\text{ème}}$ composante de $\mathbf{B}_p$ et

$$w_p = \frac{1}{1 + N_0 / \Gamma_p}$$

Le codage n'est pas pris en compte dans cette formule. A cet égard, si une partie du vecteur **A** transmis est codée par un code quelconque (convolutif, en bloc,...) alors, à chaque itération de l'algorithme EM, les probabilités conditionelles discrètes $P(A_{\delta(k)} = A \mid \{\mathbf{R}^{\ell}\}_{\ell=0}^{L-1}, \{\mathbf{G}^{\ell (d)}\}_{\ell=0}^{L-1}$ peuvent être calculées exactement en utilisant le treillis de ce code et l'algorithme de Bahl [11]. L'initialisation de l'algorithme est réalisée par la projection des symboles pilote reçus sur les N vecteurs propres $\{\mathbf{B}_k\}_{k=0}^{N-1}$ de la matrice de corrélation **F**.

On utilise donc:

$$G_p^{\prime(0)} = w_p \sum_{\delta(k) \in S_r} R_{\delta(k)}^{\ell} D_{\delta(k)}^{\cdot} B_{p\delta(k)}^{\cdot}$$

comme p$^{\text{ème}}$ composante de l'estimation initiale $\mathbf{G}^{\ell(0)}$.

Les vecteurs $\{\mathbf{B}_k\}_{k=0}^{N-1}$ sont des éléments connus au niveau du récepteur. Ils correspondent à un modèle de canal choisi. On obtient cette famille de vecteurs en calculant la matrice **F** de corrélation théorique du modèle correspondant et en tirant de celle-ci ses vecteurs propres $\{B_k\}_{k=0}^{N-1}$ et ses valeurs propres $\{\Gamma_k\}_{k=0}^{N-1}$ associées.

La recombinaison des L branches permettant de tirer profit de la diversité spatiale du récepteur est réalisée lors du traitement itératif des probabilités $P(A_{\delta(k)} = A \mid \{\mathbf{R}^{\ell}\}_{\ell=0}^{L-1}, \{\mathbf{G}^{\ell (d)}\}_{\ell=0}^{L-1})$. Après un nombre D choisi d'itérations de l'algorithme, les probabilités $P(A_{\delta(k)} = A \mid \{\mathbf{R}^{\ell}\}_{\ell=0}^{L-1}, \{\mathbf{G}^{\ell (d)}\}_{\ell=0}^{L-1})$ permettant d'obtenir une estimation souple des symboles de donnée. La décision est réalisée en traitant ces sorties souples soit directement par un organe de décision si les données ne sont pas codées, soit par un décodeur si les données sont codées.

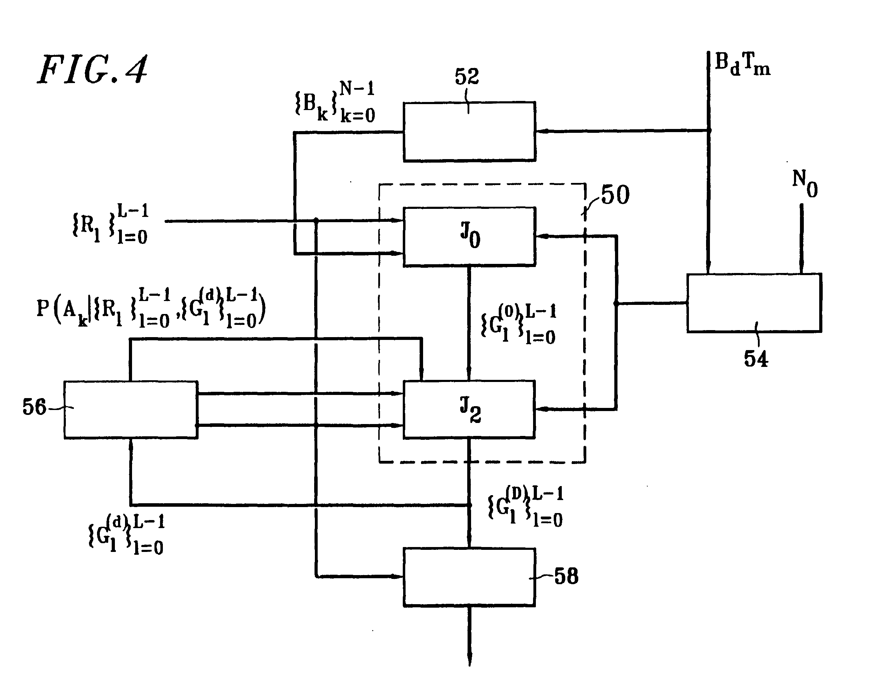

L'algorithme d'estimation améliorée de canal selon l'invention est illustré sur la figure 4. L'algorithme E.M. est symbolisé par le bloc 50, la sélection de la base adéquate par le bloc 52 qui reçoit le produit $B_d T_m$ et le calcul des pondérations par le bloc 54 qui reçoit $B_d T_m$ et $N_0$. L'algorithme E.M. du bloc 50 est itératif et comprend une initialisation représentée schématiquement par le bloc $\mathfrak{I}_0$ et D itérations $\mathfrak{I}_d$. La démodulation est représentée par le bloc 58 qui délivre les probabilités $P(A \in \Omega \mid \{\mathbf{R}^\ell\}_{\ell=0}^{L-1}, \{\mathbf{G}^{\ell(d)}\}_{\ell=0}^{L-1})$.

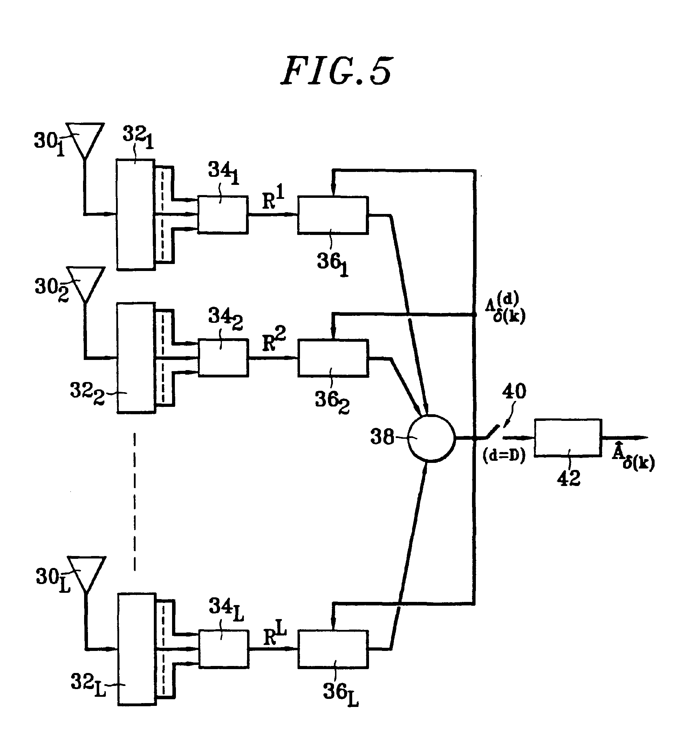

Un récepteur conforme à la description générale de l'invention est représenté schématiquement sur la figure 5. Ce récepteur comprend des moyens déjà représentés sur la figure 2 et qui portent les mêmes références. Mais le récepteur comprend des moyens pour mettre en oeuvre un algorithme d'estimation itératif qui est schématisé par le rebouclage de la sortie de l'additionneur 38 sur les moyens d'estimation $36_1$, ..., $36_L$. Par ce rebouclage, on applique à ces moyens un signal noté $\Lambda_{\delta(k)}^{(d)}$ où d représente le rang de l'itération. Le récepteur représenté comprend en outre un interrupteur symbolique 40 qui se ferme à la dernière itération D pour alimenter l'organe de décision 42.

Il est supposé, dans ce cas particulier de réalisation, que le signal OFDM reçu est composé par des symboles prenant leurs valeurs dans un alphabet $\Omega$ de type modulation à déplacement de phase à 2 ou 4 états. Les autres caractéristiques du signal reçu telles la forme des blocs, leur taille, la répartition et la puissance des symboles pilotes, ainsi que les caractéristiques du canal sont les mêmes que dans le cas général précédemment décrit.

La supposition effectuée dans ce cas particulier permet d'obtenir une expression analytique de l'estimation de $G_p^{\ell(d+1)}$. Dans le cas où les symboles proviennent d'une constellation de type MDP-2, l'espression de $G_p^{1(d+1)}$ est la suivante:

$$G_p^{\ell(d+1)} = w_p \left( \sum_{\delta(k) \in S_D} R_{\delta(k)}^{\ell} \tanh\left[2\mathrm{Re}\left\{\Lambda_{\delta(k)}^{\ell}\right\}\right]B_{p\delta(k)}^{*} + \sum_{\delta(k) \in S_D} R_{\delta(k)}^{\ell} D_{\delta(k)}^{*} B_{p\delta(k)}^{*} \right)$$

Dans le cas où les symboles proviennent d'une constellation de type MDP-4, l'expression de $G_p^{\ell(d+1)}$ est la suivante:

$$G_p^{\ell(d+1)} = w_p \sum_{\delta(k) \in S_D} (R_{\delta(k)}^{\ell}\left[\frac{1}{\sqrt{2}} \tanh\left[\sqrt{2}\mathrm{Re}\left\{\Lambda_{\delta(k)}^{\ell}\right\}\right] + \frac{j}{\sqrt{2}} \tanh\left[\sqrt{2}\,\mathrm{Im}\left\{\Lambda_{\delta(k)}^{\ell}\right\}\right]\right]^{*} B_{p\delta(k)}^{*}$$

$$+ \sum_{\delta(k) \in S_D} R_{\delta(k)}^{\ell} D_{\delta(k)}^{*} B_{p\delta(k)}^{*})$$

où $D_{\delta(k)}$ est la valeur prise par le symbole pilote $A_{\delta(k)}$, $\delta(k) \in S_P$ et :

$$\Lambda_{\delta(k)}^{(d)} = \frac{1}{N_0} \sum_{\ell=0}^{L-1} R_{\delta(k)}^{\ell}\left(\sum_{p=0}^{N-1} G_p^{\ell(d)*} B_{p\delta(k)}^{*}\right)$$

Dans cette expression, la parenthèse représente le complexe conjugué $C_{\delta(k)}^{\ell *}$ de la $\delta(k)^{\text{ème}}$ composante du canal.

La recombinaison des L branches permettant de tirer profit de la diversité en réception du récepteur est réalisée lors du traitement itératif de la variable $\Lambda_{\delta(k)}^{(d)}$. La décision est soit directement réalisée sur cette variable, si les données ne sont pas codées, soit par un décodeur si les données sont codées, après un nombre D d'itérations choisi de l'algorithme. De plus, dans le cas d'une modulation MDP-2, on peut utiliser la variante suivante:

$$\hat{A}_{\delta(k)} = \text{signe}\left(\Lambda^{(D)}_{\delta(k)}\right)$$

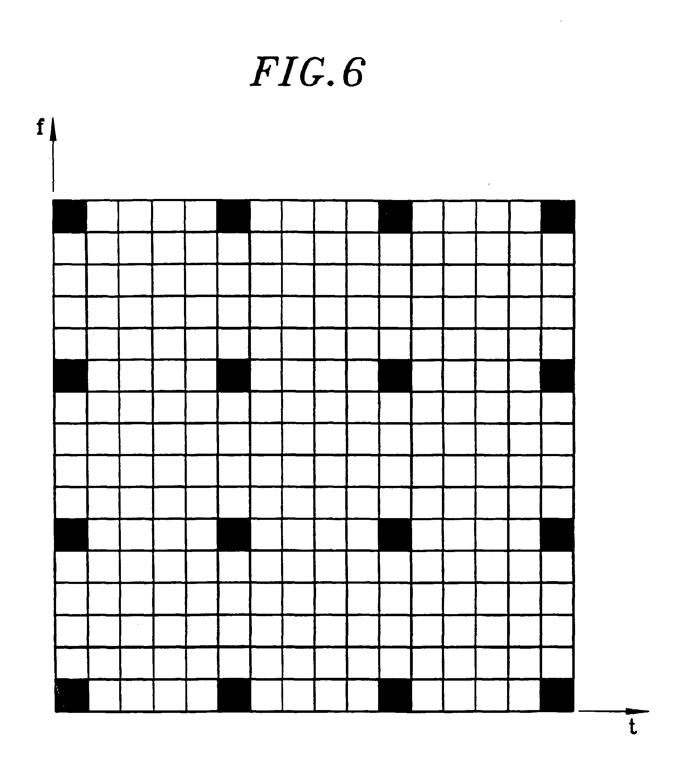

Le récepteur et le procédé de l'invention ont été simulés pour un canal multi-trajets avec un produit $B_dxT_m$ égal à $10^{-5}$. Le bloc traité par le récepteur est un carré contenant 256 symboles dont 16 symboles pilotes. Les symboles pilotes sont équirépartis dans chaque bloc temps-fréquence comme illustré sur la figure 6 où ils figurent sous forme de carrés noirs, les carrés blancs représentant les symboles de données.

Dans la simulation, le récepteur suppose que le canal est de spectre de puissance constant et de profil d'intensité multi-trajets constant. Sa fonction d'autocorrélation temps-fréquence s'écrit donc :

$$\phi(\Delta f, \Delta t) = \phi(0,0) \frac{\sin(\pi B_d \Delta t)}{\pi B_d \Delta t} \frac{\sin(\pi T_m \Delta f)}{\pi T_m \Delta f} e^{-j\pi T_m \Delta f}$$

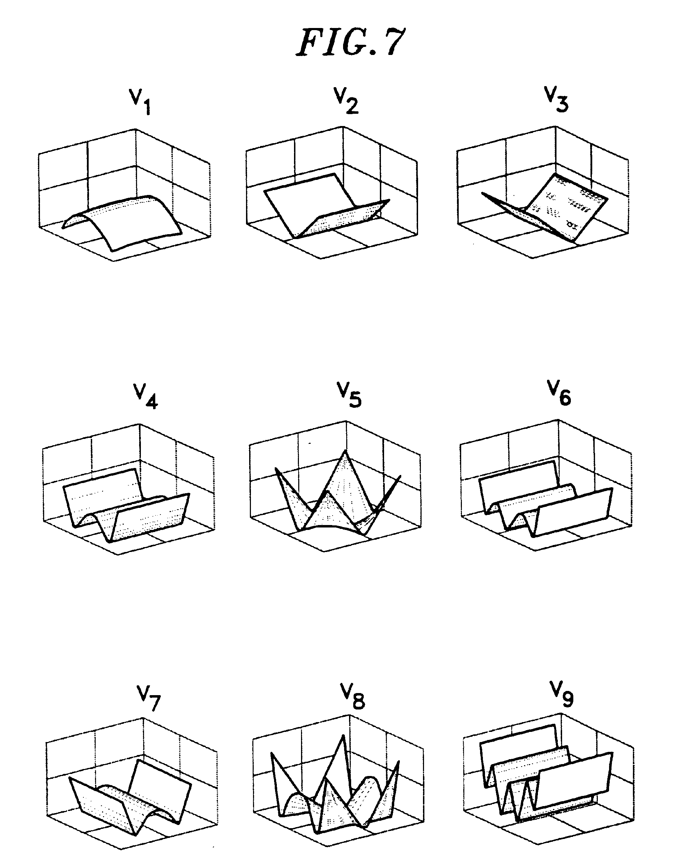

Il est possible d'utiliser les vecteurs propres provenant d'un modèle de canal arbitraire. Par exemple, un modèle de canal à spectre de puissance Doppler et de profil d'intensité multi-trajets exponentiel est illustré par les figures 6 et 7. Ces figures représentent les vecteurs propres de la matrice de corrélation du canal à spectre Doppler classique et profil d'intensité multi-trajets exponentiel pour respectivement $B_dT_m=10^{-5}$ (figure 6) et $B_dT_m=10^{-3}$ (figure 7).

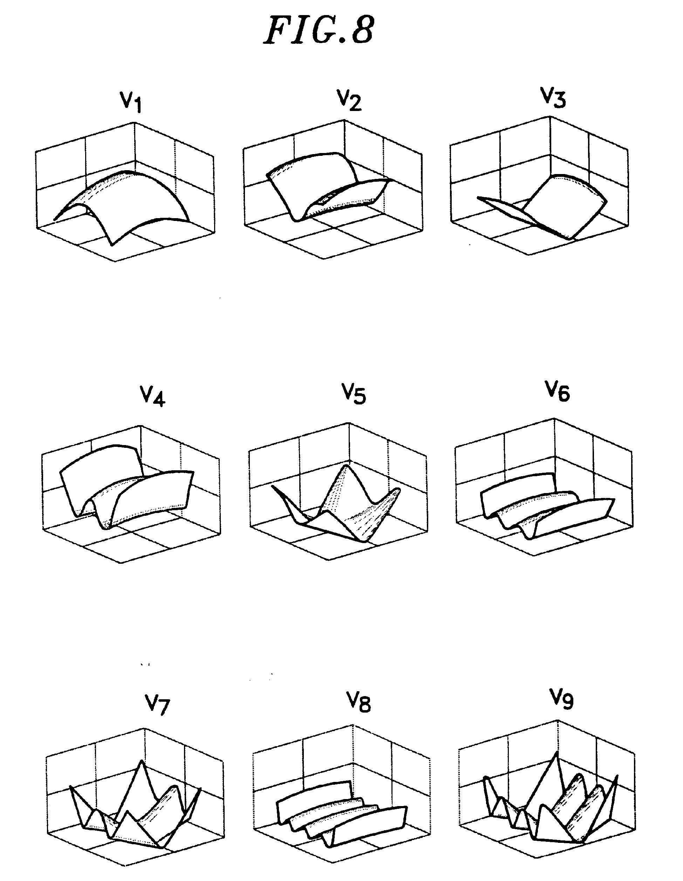

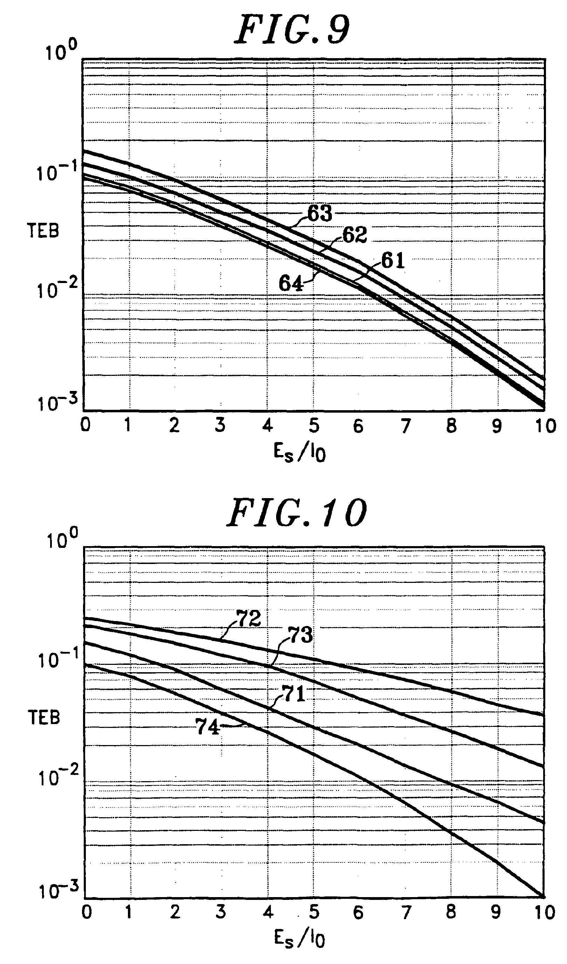

Pour illustrer les avantages de l'invention, les figures 8 et 9 comparent les performances d'un récepteur selon l'invention avec celles d'un récepteur classique de type MMSE. Ces figures donnent le taux d'erreur binaire TEB en fonction du rapport signal à bruit $E_s/I_o$. Dans les deux cas, les symboles pilotes sont supposés équirépartis comme illustré sur la figure 5. Pour la figure 8, le produit $B_dT_m$ vaut $10^{-5}$ et il vaut $10^{-3}$ pour la figure 9. Les quatre courbes de ces figures correspondent respectivement à :

> 61, 71 : estimateur selon l'invention
> 62, 72 : estimateur à MLSE constant
> 63, 73 : estimateur à MLSE
> 64, 74 : courbe de limite théorique

On voit que, dans les deux cas, l'invention conduit à de meilleures performances qu'avec les techniques classiques.

A titre d'exemple, pour un TEB brut de $10^{-2}$, l'utilisation de l'invention garantit un gain en terme de rapport signal à bruit de 3 dB par rapport au plus favorable des récepteurs classiques dans le cas d'un canal dispersif avec $B_dxT_m=10^{-3}$.

**Références**

[1] J.A.C. Bingham "Multicarrier modulation for data transmissions : an idea whose time has come", IEEE Communication Magazine, 28(5) 5-14, May 1990.

[2] "Digital Broadcasting systems for television, sound and data services", European Telecommunication Standard, prETS 300 744 (Draft, version 0.0.3), April 1996.

[3] "Radio Broadcasting Systems ; Digital Audio Broadcasting (DAB) to mobile, portable and fixed receivers", ETS 300 401, ETSI, European Telecommunication Institute, Valbonne, France, Feb. 1995.

[4] EP-0 802 656, "Signal numérique à blocs de référence multiples pour l'estimation de canal, procédés d'estimation de canal et récepteurs correspondants".

[5] A.P. Dempster, N.M. Laird and D.B. Rubin "Maximum Likelihood from incomplete data via the EM algorithm", Journal of the Royal Statistical Society, 39, 1977.

[6] G.K. Kaleh "Joint carrier phase estimation and symbole decoding of trellis codes", European Transactions on Telecommunications and Related Technologies, San Diego, Ca, Jan. 1990.

[7] C.N. Georghiades and J.C. Han : "Sequence estimation in the presence of random parameters via the EM algorithm", IEEE Transactions on Communications, 45, n°3, mar. 1997.

[8] J.G. Proakis : Digital Communications, McGraw-Hill, New York 1989.

[9] TOMBAL L. et al. : "Downlink detection schemes for MC-CDMA systems in indoor environments" IEICE TRANSACTIONS ON COMMUNICATIONS, INSTITUE OF ELECTRONICS, INFORMATION AND COMMUN. ENG., vol. E79-B, no. 9, septembre 1996, pages 1351-1360.

[10] SIALA M. et al. "Iterative rake receiver with MAP channel estimation for DS-CDMA systems" ANNALES DES TELECOMMUNICATIONS, EDITIONS HERMES, vol. 54, no. 3-4, mars 1999 (1999-03), pages 243-254, FRANCE.

[11] L.R. BAHL, J. Cocke, F. Jelinek and J. Raviv :"Optimal decoding of linear codes for minimizing symbol error rate", IEEE Transactions on Information Theory, 20, Mar. 1974.

**Revendications**

1. Récepteur pour radiocommunications à multiplexage par répartition en fréquences orthogonales (OFDM) comprenant :

   i) une pluralité de L branches de diversité traitant des blocs de symboles numériques, chaque bloc comprenant des symboles de données et des symboles pilotes répartis dans un bloc bidimensionnel temps-fréquence à $N_t$ intervalles de temps et à $N_f$ intervalles de fréquence, chaque branche de diversité comprenant un capteur radioélectrique ($30_1$, $30_2$, ..., $30_L$), des moyens ($32_1$, $32_2$, ..., $32_L$), ($34_1$, $34_2$, ..., $34_L$) délivrant un signal de sortie à N composantes constituant les composantes d'un vecteur $\mathbf{R}^\ell$, où $\underline{\ell}$ désigne le rang de la branche de diversité, $\underline{\ell}$ allant de 0 à L-1,

   ii) un estimateur de canal (E) traitant les L signaux délivrés par les différentes branches de diversité et délivrant des estimations souples des symboles de données,

   iii) un organe de décision (42) recevant les estimations souples de symboles de données et délivrant une estimation (Â) des symboles de données,

   ce récepteur étant **caractérisé en ce que** :

   (a) l'estimateur de canal (E) traite un vecteur $\mathbf{C}^\ell$ à N composantes caractérisant le canal dans un bloc bidimensionnel temps-fréquence, ces moyens d'estimation étant aptes à définir une base de N vecteurs $\mathbf{B}_k$ qui sont les M vecteurs propres normalisés de la matrice de covariance temps-fréquence du canal, ces moyens décomposant chaque vecteur $\mathbf{C}^\ell$ dans cette base, les N coefficients de cette décomposition étant notés $G_k^\ell$ avec k allant de 0 à N-1, les coefficients $G_k^\ell$ définissant, pour chaque branche $\ell$ de diversité, un vecteur $\mathbf{G}^\ell$, qui est une représentation du canal vu en sortie de ladite branche de diversité,

   (b) l'estimateur de canal (E) traite un nombre fini (D) d'itérations selon un algorithme d'estimation-maximisation (EM) fondé sur le critère de probabilité maximum a posteriori (MAP), l'estimateur étant initialement mis en oeuvre en prenant en compte les symboles pilotes contenus dans le bloc bidimensionnel temps-fréquence considéré, ce qui conduit à une estimation d'ordre 0 ($\mathfrak{I}_0$), l'estimateur prenant en compte, ensuite, les symboles estimés pour les autres itérations et ainsi de suite ($\mathfrak{I}_d$), l'estimateur délivrant finalement après une dernière itération D, les coefficients optimaux $G_k^{\ell(D)}$ k de 0 à N-1 et $\ell$ de 0 à L-1 définissant, pour chaque branche de diversité, le vecteur $\mathbf{G}^\ell$ représentant le canal.

2. Récepteur selon la revendication 1, dans lequel l'estimateur de canal (E) est apte à calculer une estimation souple des symboles de données calculée à partir des probabilités $P(A_{\delta(k)} = A | \{\mathbf{R}^\ell\}_{\ell=0}^{L-1}, \{\mathbf{G}^{\ell\,(d)}\}_{\ell=0}^{L-1})$ obtenues à partir de la recombinaison des contributions des L branches de diversité, ces contributions étant égales au produit des composantes $R_{\delta(k)}^\ell$ du vecteur signal de sortie $\mathbf{R}^\ell$ du filtre adapté de chaque branche de diversité par le complexe conjugué $C_{\delta(k)}^{\ell\,*}$ de l'estimation de la $\delta(k)^{\text{ème}}$ composante du canal obtenue après la dernière itération, où $\delta(k)$ est une fonction d'indexation bidimensionnelle.

3. Récepteur selon la revendication 2, dans lequel ladite sortie souple est soit traitée directement par un organe de décision, si les données ne sont pas codées, soit par un décodeur, si les données sont codées, fournissant le symbole (Â) finalement délivré par le récepteur.

4. Récepteur selon la revendication 1, dans lequel, dans un bloc bidimensionnel, le nombre ($N_t$) d'intervalles de temps est égal au nombre ($N_f$) d'intervalles de fréquence.

5. Procédé de réception pour radiocommunications à multiplexage par répartition en fréquences orthogonales (OFDM) dans lequel :

i) dans une pluralité de L branches de diversité on traite des blocs de symboles numériques, chaque bloc comprenant des symboles de données et des symboles pilotes répartis dans un bloc bidimensionnel temps-fréquence à $N_t$ intervalles de temps et à $N_f$ intervalles de fréquence, on reçoit le signal dans chaque branche de diversité par un capteur radioélectrique, on produit un signal de sortie à N composantes constituant les composantes d'un vecteur $\mathbf{R}^\ell$, où $\underline{\ell}$ désigne le rang de la branche de diversité, $\underline{\ell}$ allant de 0 à L-1, on estime le canal radioélectrique emprunté par le signal reçu dans un bloc bidimensionnel temps-fréquence,
ii) on recombine les signaux délivrés par les différentes branches de diversité,
iii) on prend une décision à partir du signal de recombinaison et on délivre une estimation des symboles de données,

ce procédé étant **caractérisé en ce que :**

(a) on estime le canal dans chaque branche de diversité en traitant un vecteur $\mathbf{C}^\ell$ à N composantes caractérisant le canal dans un bloc bidimensionnel temps-fréquence, on définit une base de N vecteurs $\mathbf{B}_k$ qui sont les N vecteurs propres normalisés de la matrice de covariance temps-fréquence du canal, on décompose chaque vecteur $\mathbf{C}^\ell$ dans cette base, les N coefficients de cette décomposition étant notés $G_k^\ell$ avec k allant de 0 à N-1, les coefficients $G_k^\ell$ définissant, pour chaque branche $\ell$ de diversité, un vecteur $\mathbf{G}^\ell$, qui est une représentation du canal vu en sortie de ladite branche de diversité,
(b) pour effectuer l'estimation du canal on effectue un nombre fini (D) d'itérations selon un algorithme d'estimation-maximisation (E.M.) fondé sur le critère de probabilité maximum a posteriori (MAP), on initialise les itérations en prenant en compte les symboles pilotes contenus dans le bloc bidimensionnel temps-fréquence considéré, ce qui conduit à une estimation d'ordre 0, et l'on prend en compte, ensuite, les symboles de donnée pour les autres itérations et ainsi de suite, pour obtenir finalement, après une dernière itération D, les coefficients optimaux $G_k^{\ell(D)}$ k de 0 à N-1 et $\ell$ de 0 à L-1 définissant, pour chaque branche de diversité le vecteur $\mathbf{G}^\ell$ représentant le canal.

6. Procédé selon la revendication 5, dans lequel pour effectuer la recombinaison on calcule une variable $\Lambda_{\delta(k)}^{(D)}$ en sommant les contributions des $\ell$ branches de diversité, ces contributions étant égales au produit des composantes $R_{\delta(k)}^\ell$ du vecteur signal de sortie $\mathbf{R}^\ell$ du filtre adapté de la branche de diversité considérée par le complexe conjugué $C_{\delta(k)}^{\ell*}$ de la $\delta(k)^{\text{ième}}$ composante du canal obtenue après la dernière itération, où $\delta(k)$ est une fonction d'indexation bidimensionnelle.

7. Procédé selon la revendication 6, dans lequel la variable $\Lambda_{\delta(k)}^{(D)}$ est traitée soit par un organe de décision si les données ne sont pas codées, soit par un décodeur si les données sont codées, fournissant les symboles estimé ($\hat{A}_{\delta(k)}$) finalement délivrés par le récepteur.

8. Procédé selon la revendication 5, dans lequel on détermine le signe de la variable $\Lambda_{\delta(k)}^{(D)}$, lequel signe constitue le symbole estimé ($\hat{A}_{\delta(k)}$) que l'on délivre finalement.

9. Procédé selon la revendication 5, dans lequel, dans un bloc bidimensionnel, le nombre ($N_t$) d'intervalles de temps est égal au nombre ($N_f$) d'intervalles de fréquence.

**Claims**

1. Receiver for orthogonal frequency division multiplexing (OFDM) radiocommunications comprising:

   i) a plurality of L diversity branches processing blocks of digital symbols, each block comprising data symbols and pilot symbols distributed in a bidimensional time-frequency block with $N_t$ time intervals and with $N_f$ frequency intervals, each diversity branch comprising a radioelectric sensor ($30_1$, $30_2$, ..., $30_L$), means ($32_1$, $32_2$, ..., $32_L$), ($34_1$, $34_2$, ..., $34_L$) delivering an output signal with N components constituting the components of a vector $\mathbf{R}^\ell$, where $\ell$ denotes the rank of the diversity branch, $\ell$ going from 0 to L-1,

   ii) a channel estimator (E) processing the L signals delivered by the various diversity branches and delivering soft estimates of the data symbols,

   iii) a decision facility (42) receiving the soft estimates of data symbols and delivering an estimation (Â) of the data symbols,

   this receiver being **characterized in that**:

   (a) the channel estimator (E) processes a vector $\mathbf{C}^\ell$ with N components characterizing the channel in a bidimensional time-frequency block, these estimation means being able to define a basis of N vectors $\mathbf{B}_k$ which are the M normalized eigenvectors of the time-frequency covariance matrix of the channel, these means decomposing each vector $\mathbf{C}^\ell$ in this basis, the N coefficients of this decomposition being denoted

   $G_k^\ell$ with k going from 0 to N-1, the coefficients $G_k^\ell$ defining, for each diversity branch $\ell$, a vector $\mathbf{G}^\ell$, which is a representation of the channel seen at the output of the said diversity branch,

   (b) the channel estimator (E) processes a finite number (D) of iterations according to an estimation-maximization algorithm (EM) based on the maximum a posteriori probability criterion (MAP), the estimator being initially implemented by taking into account the pilot symbols contained in the bidimensional time-frequency block considered, this leading to an estimate of order 0 ( $\mathfrak{I}_0$ ), the estimator taking into account, thereafter, the symbols estimated for the other iterations and so on and so forth ($\mathfrak{I}_d$), the estimator ultimately delivering after a last iteration D, the optimal coefficients $G_k^{\ell(D)}$ k from 0 to N-1 and $\ell$ from 0 to L-1 defining, for each diversity branch, the vector $\mathbf{G}^\ell$ representing the channel.

2. Receiver according to Claim 1, in which the channel estimator (E) is able to calculate a soft estimate of the data symbols which is calculated using the probabilities $P(A_{\delta(k)} = A | \{\mathbf{R}^\ell\}_{\ell=0}^{L-1}, \{\mathbf{G}^{\ell(d)}\}_{\ell=0}^{L-1})$ obtained using the recombination of the contributions of the L diversity branches, these contributions being equal to the product of the components $R_{\delta(k)}^\ell$ of the output signal vector $\mathbf{R}^\ell$ of the matched filter of each diversity branch and the complex conjugate $C_{\delta(k)}^{\ell*}$ of the estimation of the $\delta(k)^{th}$ channel component obtained after the last iteration, where $\delta(k)$ is a bidimensional indexation function.

3. Receiver according to Claim 2, in which the said soft output is either processed directly by a decision facility, if the data are not coded, or by a decoder, if the data are coded, providing the symbol (Â) ultimately delivered by the receiver.

4. Receiver according to Claim 1, in which, in a bidimensional block, the number ($N_t$) of time intervals is equal to the number ($N_f$) of frequency intervals.

5. Reception method for orthogonal frequency division multiplexing (OFDM) radiocommunications, in which:

   i) in a plurality of L diversity branches, blocks of digital symbols are processed, each block comprising data symbols and pilot symbols distributed in a bidimensional time-frequency block with $N_t$ time intervals and with $N_f$ frequency intervals, the signal in each diversity branch is received by a radioelectric sensor, an output signal with N components constituting the components of a vector $\mathbf{R}^\ell$ is produced, where $\ell$ denotes the rank of the diversity branch, $\ell$ going from 0 to L-1, the radioelectric channel followed by the signal received in a bidimensional time-frequency block is estimated,

   ii) the signals delivered by the various diversity branches are recombined,

   iii) a decision is taken using the recombination signal and an estimation of the data symbols is delivered,

this method being **characterized in that**:

(a) the channel in each diversity branch is estimated by processing a vector $\mathbf{C}^\ell$ with N components characterizing the channel in a bidimensional time-frequency block, a basis of N vectors $\mathbf{B}_k$ is defined, these being the N normalized eigenvectors of the time-frequency covariance matrix of the channel, each vector $\mathbf{C}^\ell$ is decomposed in this basis, the N coefficients of this decomposition being denoted $G_k^\ell$ with k going from 0 to N-1, the coefficients $G_k^\ell$ defining, for each diversity branch $\ell$, a vector $\mathbf{G}^\ell$, which is a representation of the channel seen at the output of the said diversity branch,

(b) to perform the channel estimation, a finite number (D) of iterations is performed according to an estimation-maximization algorithm (E.M.) based on the maximum a posteriori probability criterion (MAP), the iterations are initialized by taking into account the pilot symbols contained in the bidimensional time-frequency block considered, this leading to an estimate of order 0, and, thereafter, the data symbols are taken into account for the other iterations and so on and so forth, so as to ultimately obtain, after a last iteration D, the optimal coefficients $G_k^{\ell(D)}$ k from 0 to N-1 and $\ell$ from 0 to L-1 defining, for each diversity branch the vector $\mathbf{G}^\ell$ representing the channel.

6. Method according to Claim 5, in which, to perform the recombination, a variable $\Lambda_{\delta(k)}^{(D)}$ is calculated by summing the contributions of the $\ell$ diversity branches, these contributions being equal to the product of the components $R_{\delta(k)}^\ell$ of the output signal vector $\mathbf{R}^\ell$ of the matched filter of the diversity branch considered and the complex conjugate $C_{\delta(k)}^{\ell*}$ of the $\delta(k)^{th}$ channel component obtained after the last iteration, where $\delta(k)$ is a bidimensional indexation function.

7. Method according to Claim 6, in which the variable $\Lambda_{\delta(k)}^{(D)}$ is processed either by a decision facility if the data are not coded, or by a decoder if the data are coded, providing the estimated symbols ($\hat{A}_{\delta(k)}$) ultimately delivered by the receiver.

8. Method according to Claim 5, in which the sign of the variable $\Lambda_{\delta(k)}^{(D)}$ is determined, which sign constitutes the estimated symbol ($\hat{A}_{\delta(k)}$) that is ultimately delivered.

9. Method according to Claim 5, in which, in a bidimensional block, the number ($N_t$) of time intervals is equal to the number ($N_f$) of frequency intervals.

**Patentansprüche**

1. Empfänger für Funkübertragungen im orthogonalen Frequenzmultiplex (OFDM), der aufweist:

i) mehrere L Diversity-Zweige, die Blöcke von digitalen Symbolen verarbeiten, wobei jeder Block Datensymbole und Pilotsymbole aufweist, die in einem zweidimensionalen Zeit-Frequenz-Block mit $N_t$ Zeitintervallen und $N_f$ Frequenzintervallen verteilt sind, wobei jeder Diversity-Zweig einen funkelektrischen Sensor ($30_1$, $30_2$, ..., $30_L$) aufweist, wobei Mittel ($32_1$, $32_2$, ..., $32_L$), ($34_1$, $34_2$, ..., $34_L$) ein Ausgangssignal mit N Komponenten ausgeben, die die Komponenten eines Vektors $\mathbf{R}^\ell$ bilden, wobei $\underline{\ell}$ den Rang des Diversity-Zweigs bezeichnet, wobei $\underline{\ell}$ von 0 bis L-1 geht,
ii) einen Kanalschätzer (E), der die von den verschiedenen Diversity-Zweige ausgegebenen L Signale verarbeitet und flexible Schätzungen der Datensymbole ausgibt,
iii) ein Entscheidungsglied (42), das die flexiblen Schätzungen von Datensymbolen empfängt und eine Schätzung ($\hat{A}$) der Datensymbole ausgibt,

wobei dieser Empfänger **dadurch gekennzeichnet ist, dass**:

(a) der Kanalschätzer (E) einen Vektor $\mathbf{C}^\ell$ mit N Komponenten verarbeitet, der den Kanal in einem zweidimensionalen Zeit-Frequenz-Block kennzeichnet, wobei diese Schätzmittel fähig sind, eine Basis von N Vektoren

B$_k$ zu definieren, die die M eigenen genormten Vektoren der Zeit-Frequenz-Kovarianzmatrix des Kanals sind, wobei diese Mittel jeden Vektor **C**$^\ell$ in dieser Basis zerlegen, wobei die N Koeffizienten dieser Zerlegung mit $G_k^\ell$ bezeichnet sind, wobei k von 0 bis N-1 geht, wobei die Koeffizienten $G_k^\ell$ für jeden Diversity-Zweig $\ell$ einen Vektor **G**$^\ell$ definieren, der eine Darstellung des Kanals am Ausgang des Diversity-Zweigs gesehen ist, (b)der Kanalschätzer (E) eine endliche Anzahl (D) von Iterationen gemäß einem Algorithmus der Schätzung-Maximierung (EM) verarbeitet, der auf dem Maximum-A-Posteriori-Kriterium (MAP) beruht, wobei der Schätzer zu Anfang eingesetzt wird, indem er Pilotsymbole berücksichtigt, die in dem betrachteten zweidimensionalen Zeit-Frequenz-Block enthalten sind, was zu einer Schätzung der Ordnung 0 ($\mathfrak{S}_0$) führt, wobei der Schätzer anschließend die geschätzten Symbole für die anderen Iterationen berücksichtigt, und so weiter ($\mathfrak{S}_d$), wobei der Schätzer schließlich nach einer letzten Iteration D die optimalen Koeffizienten $G_k^{\ell(D)}$ mit k von 0 bis N-1 und $\ell$ von 0 bis L-1 ausgibt, die für jeden Diversity-Zweig den Vektor **G**$^\ell$ definieren, der den Kanal darstellt.

**2.** Empfänger nach Anspruch 1, bei dem der Kanalschätzer (E) fähig ist, eine flexible Schätzung der Datensymbole zu berechnen, die ausgehend von den Wahrscheinlichkeiten $P\left( A_{\delta(k)} = A \middle| \left\{ R^\ell \right\}_{\ell=0}^{L-1}, \left\{ G^{\ell(d)} \right\}_{\ell=0}^{L-1} \right)$ berechnet wird, die ausgehend von der Rekombination der Beiträge der L Diversity-Zweige erhalten werden, wobei diese Beiträge gleich dem Produkt aus den Komponenten $R_{\delta(k)}^\ell$ des Ausgangssignal-Vektors **R**$^\ell$ des angepassten Filters jedes Diversity-Zweigs und aus dem konjugierten Komplex $C_{\delta(k)}^{\ell *}$ der Schätzung der δ(k)-ten Komponente des Kanals ist, die nach der letzten Iteration erhalten wird, wobei δ(k) eine zweidimensionale Indexierungsfunktion ist.

**3.** Empfänger nach Anspruch 2, bei dem der flexible Ausgang entweder direkt von einem Entscheidungsmechanismus, wenn die Daten nicht codiert sind, oder von einem Decoder verarbeitet wird, wenn die Daten codiert sind, der das schließlich vom Empfänger ausgegebene Signal (Â) liefert.

**4.** Empfänger nach Anspruch 1, bei dem in einem zweidimensionalen Block die Anzahl (N$_t$) von Zeitintervallen gleich der Anzahl (N$_f$) von Frequenzintervallen ist.

**5.** Verfahren zum Empfang von Funkübertragungen im orthogonalen Frequenzmultiplex (OFDM), bei dem:

i) in mehreren L Diversity-Zweigen Blöcke von digitalen Symbolen verarbeitet werden, wobei jeder Block Datensymbole und Pilotsymbole aufweist, die in einem zweidimensionalen Zeit-Frequenz-Block mit N$_t$ Zeitintervallen und N$_f$ Frequenzintervallen verteilt sind, das Signal in jedem Diversity-Zweig von einem funkelektrischen Sensor empfangen wird, ein Ausgangssignal mit N Komponenten erzeugt wird, die die Komponenten eines Vektors R' bilden, wobei $\ell$ den Rang des Diversity-Zweigs bezeichnet, wobei $\ell$ von 0 bis L-1 geht, wobei der von dem empfangenen Signal benutzte funkelektrische Kanal in einem zweidimensionalen Zeit-Frequenz-Block geschätzt wird,
ii) die von den verschiedenen Diversity-Zweigen ausgegebenen Signale rekombiniert werden,
iii) eine Entscheidung ausgehend von dem Rekombinationssignal getroffen und eine Schätzung der Datensymbole ausgegeben wird,

wobei dieses Verfahren **dadurch gekennzeichnet ist, dass**:

(a)der Kanal in jedem Diversity-Zweig geschätzt wird, indem ein Vektor **C**$^\ell$ mit N Komponenten verarbeitet wird, der den Kanal in einem zweidimensionalen Zeit-Frequenz-Block kennzeichnet, eine Basis von N Vektoren B$_k$ definiert wird, die die N eigenen genormten Vektoren der Zeit-Frequenz-Kovarianzmatrix des Kanals sind, jeder Vektor **C**$^\ell$ in dieser Basis zerlegt wird, wobei die N Koeffizienten dieser Zerlegung mit $G_k^\ell$ bezeichnet sind, wobei k von 0 bis N-1 geht, wobei die Koeffizienten $G_k^\ell$ für jeden Diversity-Zweig $\ell$ einen Vektor **G**$^\ell$ definieren, der eine Darstellung des Kanals am Ausgang des Diversity-Zweigs gesehen ist,
(b)um die Schätzung des Kanals durchzuführen, eine endliche Anzahl (D) von Iterationen gemäß einem Algorithmus der Schätzung-Maximierung (E.M.) durchgeführt wird, der auf dem Maximum-A-Posteriori-Kriterium (MAP) beruht, die Iterationen initialisiert werden, indem die Pilotsymbole berücksichtigt werden, die in dem betrachteten zweidimensionalen Zeit-Frequenz-Block enthalten sind, was zu einer Schätzung der Ordnung 0 führt, und anschließend die Datensymbole für die anderen Iterationen und so weiter berücksichtigt werden, um schließlich nach einer letzten Iteration D die optimalen Koeffizienten $G_k^{\ell(D)}$ mit k von 0 bis N-1 und $\ell$ von 0 bis L-1 zu erhalten, die für jeden Diversity-Zweig den Vektor $\mathbf{G}^\ell$ definieren, der den Kanal darstellt.

6. Verfahren nach Anspruch 5, bei dem zur Durchführung der Rekombination eine Variable $\Lambda_{\delta(k)}^D$ berechnet wird, indem die Beiträge der $\ell$ Diversity-Zweige summiert werden, wobei diese Beiträge gleich dem Produkt aus den Komponenten $R_{\delta(k)}^\ell$ des Ausgangssignal-Vektors $\mathbf{R}^\ell$ des angepassten Filters des betrachteten Diversity-Zweigs und aus dem konjugierten Komplex $C_{\delta(k)}^{\ell*}$ der $\delta(k)$-ten Komponente des Kanals ist, die nach der letzten Iteration erhalten wird, wobei $\delta(k)$ eine zweidimensionale Indexierungsfunktion ist.

7. Verfahren nach Anspruch 6, bei dem die Variable $\Lambda_{\delta(k)}^D$ entweder von einem Entscheidungsmechanismus, wenn die Daten nicht codiert sind, oder von einem Decoder verarbeitet wird, wenn die Daten codiert sind, der die geschätzten Symbole ($Â_{\delta(k)}$) liefert, die schließlich vom Empfänger ausgegeben werden.

8. Verfahren nach Anspruch 5, bei dem das Vorzeichen der Variablen $\Lambda_{\delta(k)}^{(D)}$ bestimmt wird, wobei das Vorzeichen das geschätzte Symbol ($Â_{\delta(k)}$) bildet, das schließlich ausgegeben wird.

9. Verfahren nach Anspruch 5, bei dem in einem zweidimensionalen Block die Anzahl ($N_t$) von Zeitintervallen gleich der Anzahl ($N_f$) von Frequenzintervallen ist.

FIG.1

FIG.2

## FIG.3

*FIG.4*

# FIG.5

# FIG.6

# FIG.7

# FIG.8

V₁ V₂ V₃

V₄ V₅ V₆

V₇ V₈ V₉

# *FIG.9*

# *FIG.10*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0802656 A

**Littérature non-brevet citée dans la description**

- **J.A.C. BINGHAM.** Multicarrier modulation for data transmissions : an idea whose time has come. *IEEE Communication Magazine,* Mai 1990, vol. 28 (5), 5-14
- Digital Broadcasting systems for television, sound and data services. *European Telecommunication Standard,* Avril 1996
- Radio Broadcasting Systems ; Digital Audio Broadcasting (DAB) to mobile, portable and fixed receivers. *European Telecommunication Institute,* Février 1995
- **A.P. DEMPSTER ; N.M. LAIRD ; D.B. RUBIN.** Maximum Likelihood from incomplete data via the EM algorithm. *Journal of the Royal Statistical Society,* 1977, vol. 39
- **G.K. KALEH.** Joint carrier phase estimation and symbole decoding of trellis codes. *European Transactions on Telecommunications and Related Technologies,* Janvier 1990

- **C.N. GEORGHIADES ; J.C. HAN.** Sequence estimation in the presence of random parameters via the EM algorithm. *IEEE Transactions on Communications,* Mars 1997, vol. 45 (3
- **J.G. PROAKIS.** Digital Communications. Mc-Graw-Hill, 1989
- **TOMBAL L. et al.** Downlink detection schemes for MC-CDMA systems in indoor environments. *IEICE TRANSACTIONS ON COMMUNICATIONS, INSTITUE OF ELECTRONICS, INFORMATION AND COMMUN. ENG.,* Septembre 1996, vol. E79-B (9), 1351-1360
- **SIALA M. et al.** Iterative rake receiver with MAP channel estimation for DS-CDMA systems. *ANNALES DES TELECOMMUNICATIONS, EDITIONS HERMES,* Mars 1999, vol. 54 (3-4), 243-254
- **L.R. BAHL ; J. COCKE ; F. JELINEK ; J. RAVIV.** Optimal decoding of linear codes for minimizing symbol error rate. *IEEE Transactions on Information Theory,* Mars 1974, vol. 20